# FASCICULE DE BREVET EUROPEEN

(11) **EP 0 430 757 B1**
(45) Date de publication et mention de la délivrance du brevet: **27.01.1993**
(21) Numéro de dépôt: 90403257.0
(22) Date de dépôt: 19.11.1990
(51) Int. Cl.: A23L 1/32

(54) **Procédé de fractionnement du jaune d'oeuf de poule**
Verfahren zur Fraktionierung des Hühnereigelbs
Process for fractioning of chicken egg yolk

(30) Priorité: 27.11.1989 FR 8915555
(43) Date de publication de la demande: 05.06.1991
(73) Titulaire: EUROPE PROTEINES INDUSTRIES BRETAGNE Société Anonyme, F-22360 Langueux (FR)
(72) Inventeur: Corlay, Yvon, F-29400 Plouneventer (FR); Causeret, Denis, F-22000 St-Brieuc (FR); Lorient, Denis, F-21240 Talant (FR)
(74) Mandataire: Bourgognon, Jean-Marie

(56) Documents cités:
- EP-A- 0 048 818
- GB-A- 1 253 452
- PATENT ABSTRACTS OF JAPAN, vol. 13, no. 227 (C-600)(3575), 25 mai 1989

## Description

La présente invention se rapporte aux procédés de fractionnement du jaune d'oeuf, notamment de celui de l'oeuf de poule.

Dans un article paru dans Journal of Food Science volume 47 (1982) p.1903 à 1907 intitulé "Fractionation and characterization of hen's egg yolk phosvitin" Yutaka Abe et collaborateurs décrivent un procédé de préparation de la phosvitine, qui consiste, en un premier stade, à centrifuger du jaune d'oeuf mélangé à deux volumes de MgSO₄0,45M à 80000g, pendant 17 heures, à 0°C, pour obtenir, comme décrit déjà par Burley et Cook dans un article paru dans Can.J.Biochem.Physiol.vol.39 (1961) p.192 à 1307, des granules solides contenant de la phosvitine et du plasma liquide.

Ces procédés de laboratoire se sont avérés ne pas être transposables à l'échelle industrielle, en raison des accélérations centrifuges supérieures à 10000g et des grandes vitesses de rotation mises en oeuvre.

L'invention vise un procédé de fractionnement du jaune d'oeuf en du plasma et en des granules qui, tout en donnant une séparation franche des granules et du plasma à des rendements élevés, peut être mis en oeuvre à l'échelle industrielle, sans pour autant nécessiter des accélérations centrifuges trop élevées.

Le procédé de fractionnement du jaune d'oeuf de poule en du plasma et en des granules par centrifugation du jaune d'oeuf dilué dans de l'eau dans la proportion pondérale de 0,5 à 3 parties d'eau pour une partie de jaune d'oeuf est caractérisé en ce qu'il consiste :
- à faire précéder la centrifugation du jaune d'oeuf dilué d'une opération de dispersion du jaune d'oeuf frais dans un homogénéiseur à effet de cisaillement ménagé à une température inférieure à 50°C et, de préférence, inférieure à 20°C, pour obtenir du jaune d'oeuf dispersé,
- à porter le jaune d'oeuf dispersé et dilué à une température comprise entre 40°C et 70°C, et
- à effectuer la centrifugation à cette température.

Le premier stade du procédé suivant l'invention consiste à effectuer une opération de dispersion. On a constaté, en effet, d'une manière inattendue que, si l'on se dispense de cette opération de dispersion, le plasma contient encore des granules après la centrifugation effectuée dans des conditions industrielles normales, ce qui diminue beaucoup le rendement. Cette opération de dispersion doit être réglée d'une manière précise, d'une part en l'effectuant sur du jaune d'oeuf frais, cassé depuis moins de cinq jours, et notamment depuis moins de deux jours et, d'autre part, dans un homogénéiseur à effet de cisaillement, tout en réglant les conditions et la durée de fonctionnement de l'homogénéiseur de manière que le cisaillement du jaune d'oeuf ne dépasse pas une certaine limite. On constate en effet, au-delà de ce seuil, que les rendements lors de la centrifugation ultérieure s'abaissent à nouveau en raison, semble-t-il, d'une destruction prématurée des granules lors de l'opération de dispersion. Les granules sont sensibles aux chocs mécaniques et, lorsqu'une granule a éclaté, les protéines qui s'y trouvent sont dissoutes dans le milieu et ne peuvent plus être séparées par centrifugation. On a obtenu de bons résultats dans des conditions de cisaillement correspondant à celles qui règnent dans un broyeur colloïdal de type Stéphan, modèle Microcut MC10 que l'on peut se procurer auprès de la Société Stéphan France S.A.R.L. Zac du Mandinet, centre Evolie, 2, rue des Campanules, Lognes, Torcy. Il convient de faire fonctionner ce broyeur colloïdal avec un débit de sortie du produit compris entre 80 et 1200 kg/h et, de préférence, entre 400 et 800 kg/h. On obtient alors des rendements pondéraux en granules de 9 à 10 % avec un maximum de 12 % pour une vitesse de sortie de 600 kg/h, alors qu'en opérant en-dehors de cette plage de fonctionnement, les rendements peuvent s'abaisser jusqu'à 2 %, voire moins. On pourrait aussi utiliser une turbine, par exemple une turbine IKA, que l'on peut se procurer auprès de la Société Auxicom, 3, rue Saint-Joseph, à Nantes, qui peut fournir des résultats acceptables, notamment lorsqu'elle est réglée de manière à n'avoir qu'un seul étage. On obtient aussi des résultats acceptables avec un mixeur de type Dynamic fourni par la société Dynamic à Vence, modèle MX79 d'une puissance de 250W à 3 couteaux et avec une vitesse en charge sur l'eau de 8300 t/min, alors qu'un modèle Bermixer ne donne pas de résultats satisfaisants car son couple moteur est insuffisant. On effectue, en général, la dispersion à une température de 20°C, bien qu'on puisse opérer jusqu'à 50°C, température inférieure à celle de coagulation.

De préférence, on additionne le jaune d'oeuf de 0,5 à 2 % en poids d'un sel, notamment de ClNa. On effectue de préférence cette addition de sel avant la dispersion.

Le deuxième stade du procédé suivant l'invention consiste à diluer le jaune d'oeuf dispersé dans de l'eau dans la proportion pondérale de 0,5 à 3 parties d'eau pour une partie de jaune d'oeuf. En dehors de cette plage de dilution, les rendements en granules s'abaissent beaucoup.

Le troisième stade du procédé suivant l'invention consiste à porter le jaune d'oeuf dispersé et dilué à une température comprise entre 40°C et 70°C, de manière à en abaisser la viscosité. On a constaté, en effet, que des séparateurs centrifuges à assiettes ne permettent pas d'effectuer une séparation quand la matière solide séparée a une teneur en matières sèches de 50 % en poids. Seuls les décanteurs centrifuges permettent d'effectuer cette séparation, mais leur force d'accélération ne peut guère dépasser 5000 g. En diminuant la viscosité du jaune d'oeuf, on peut alors utiliser un décanteur centrifuge fonctionnant à une accélération inférieure à 5000 g pour effectuer le quatrième stade du procédé suivant l'invention. Dans un cinquième stade de conditionnement, on refroidit séparément le plasma et les granules et on les conserve à 4°C.

On donne, ci-dessous, un exemple du procédé suivant l'invention.

On casse 340 kg d'oeufs pour obtenir 200 kg de blanc d'oeuf que l'on utilise en dehors du procédé et 100 kg de jaune d'oeuf ayant un extrait sec de 45 % en poids. On ajoute à ces 100 kg de jaune d'oeuf à 10°C, 1 kg de chlorure de sodium. Dans l'heure qui suit, on homogénéise le jaune d'oeuf et le sel à l'aide d'un broyeur colloïdal Stéphan de type Microcut MC10, à un débit de sortie du produit de 600 kg/h.

On mélange les 101 kg de jaune dispersés à 101 kg d'eau en obtenant 202 kg de jaune dilués à 22,7 % en poids d'extrait sec. Après pasteurisation à 70°C pendant 30 secondes et chambrage pendant 3 minutes à 66°C, le produit est envoyé à chaud sur un décanteur centrifuge (Westfalia) CA365, fonctionnant à 3700 g à un débit de 250 litres/heure.

On obtient à la sortie 181,8 kg de plasma sous la forme d'un liquide à 20 % en poids d'extrait sec et 20,2 kg de granules solides à 48 % en poids d'extrait sec.

On refroidit le plasma liquide à 4°C par passage à contre-courant dans le pasteurisateur.

On refroidit les granules qui sortent à 35°C, à 4°C sur un tapis transporteur avec circulation d'eau glacée et on les stocke en chambre froide.

Le rendement en granules, c'est-à-dire le rapport du poids de granules obtenu au poids de jaune d'oeuf dilué, est de 12 %.

On reprend les opérations mentionnées ci-dessus, mais en opérant respectivement à une vitesse de sortie du broyeur colloïdal de 85 kg/h et de 1200 kg/h. On obtient des rendements de 10 et 9 %, respectivement.

## Revendications

1. Procédé de fractionnement du jaune d'oeuf de poule en du plasma et en des granules, par centrifugation du jaune d'oeuf dilué dans de l'eau dans la proportion pondérale de 0,5 à 3 parties d'eau pour une partie de jaune d'oeuf, caractérisé en ce qu'il consiste :
- à faire précéder la centrifugation du jaune d'oeuf dilué d'une opération de dispersion du jaune d'oeuf frais dans un homogénéiseur à effet de cisaillement ménagé, à une température inférieure à 50°C et, de préférence, inférieure à 20°C, pour obtenir du jaune d'oeuf dispersé,
- à porter le jaune d'oeuf dispersé et dilué à une température comprise entre 40°C et 70°C, et
- à effectuer la centrifugation à cette température.

2. Procédé suivant la revendication 1, caractérisé en ce qu'il consiste à effectuer la dispersion dans des conditions et durée de cisaillement correspondant à celles qui règnent dans un broyeur colloïdal de type Stéphan, modèle Microcut MC10, pour un débit de sortie du produit compris entre 80 et 1200 kg/h et, de préférence, entre 400 et 800 kg/h.

3. Procédé suivant la revendication 1 ou 2, caractérisé en ce qu'il consiste à effectuer la centrifugation dans un décanteur centrifuge à une accélération centrifuge inférieure à 5000 g.

4. Procédé suivant l'une des revendications précédentes, caractérisé en ce qu'il consiste à ne diluer le jaune d'oeuf qu'après la dispersion.

5. Procédé suivant l'une des revendications 1 à 4, caractérisé en ce qu'il consiste à additionner le jaune d'oeuf de 0,5 à 2 % en poids d'un sel, notamment de ClNa.

6. Procédé suivant la revendication 5, caractérisé en ce qu'il consiste à ajouter le sel au jaune d'oeuf avant la dispersion.

## Patentansprüche

1. Verfahren zur Fraktionierung von Hühnereigelb in Plasma und Körnchen durch Zentrifugieren des mit Wasser in einem Gewichtsverhältnis von 0,5 bis 3 Teilen Wasser auf einen Teil Eigelb verdünnten Eigelbs,
dadurch **gekennzeichnet**, daß
- vor dem Zentrifugieren des verdünnten Eigelbs eine Dispergierbehandlung des frischen Eigelbs in einem Homogenisator durchgeführt wird zur schonenden Scherbehandlung bei einer Temperatur unterhalb von 50° C, vorzugsweise bei 20° C, um dispergiertes Eigelb zu erhalten;
- das dispergierte und verdünnte Eigelb auf einer Temperatur zwischen 40° C und 70° C gehalten wird; und
- das Zentrifugieren bei dieser Temperatur durchgeführt wird.

2. Verfahren nach Anspruch 1,
dadurch **gekennzeichnet**, daß
die Dispergierbehandlung unter Bedingungen und einer Dauer der Scherbehandlung durchgeführt wird, die denen entsprechen, welche in einer Kolloidmühle des Typs Stephan, Model Microcut MC10 eine Produktaustrittsmenge zwischen 80 und 1200 kg/h, vorzugsweise zwischen 400 und 800 kg/h, ergeben.

3. Verfahren nach Anspruch 1 oder 2,
dadurch **gekennzeichnet**, daß
das Zentrifugieren in einem Zentrifugaldekantierapparat bei einer Zentrifugalbeschleunigung unterhalb von 5000 g durchgeführt wird.

4. Verfahren nach einem der vorhergehenden Ansprüche,
dadurch **gekennzeichnet**, daß
die Verdünnung des Eigelbs erst nach der Dispergierbehandlung vorgenommen wird.

5. Verfahren nach einem der Ansprüche 1 bis 4,
dadurch **gekennzeichnet**, daß
dem Eigelb 0,5 bis 2 Gew.-% Salz, insbesondere NaCl, zugegeben wird.

6. Verfahren nach Anspruch 5,
dadurch **gekennzeichnet**, daß
das Salz dem Eigelb vor der Dispergierbehandlung zugegeben wird.

## Claims

1. A process for fractionating hen's egg yolk into plasma and granules by centrifuging the egg yolk diluted in water in a ratio by weight of 0.5 to 3 parts of water to 1 part of egg yolk, characterised in that it comprises:
- preceding the centrifugation of the diluted egg yolk by an operation of dispersing the fresh egg yolk in a homogeniser with a controlled shearing action, at a temperature below 50°C and, preferably, below 20°C, in order to obtain dispersed egg yolk,
- raising the dispersed and diluted egg yolk to a temperature between 40°C and 70°C, and
- carrying out the centrifugation at said temperature.

2. A process according to claim 1, characterised in that it comprises carrying out the dispersion under the same conditions and for the same duration of shearing as those existing in a colloidal mill of the Stéphan type, Microcut MC10 model, at an output speed of the product between 80 and 1200 kg/h and, preferably, between 400 and 800 kg/h.

3. A process according to either claim 1 or 2, characterised in that it comprises carrying out the centrifugation in a centrifuge machine at a centrifugal acceleration below 5000 g.

4. A process according to any one of the preceding claims, characterised in that the egg yolk is diluted only after the dispersion.

5. A process according to any one of claims 1 to 4, characterised in that it comprises adding 0.5 to 2 weight % of a salt, in particular NaCl, to the egg yolk.

6. A process according to claim 5, characterised in that it comprises adding the salt to the egg yolk before the dispersion.
